# EUROPEAN PATENT SPECIFICATION

(11) **EP 0 459 661 B1**
(45) Date of publication and mention of the grant of the patent: **02.08.1995**
(21) Application number: 91304381.6
(22) Date of filing: 15.05.1991
(51) Int. Cl.: C02F 5/08, C02F 5/10, C02F 5/12

(54) **Silica scale inhibition**
Verhütung von Kieselsäureablagerungen
Inhibition de tartre de silice

(30) Priority: 23.05.1990 US 527420
(43) Date of publication of application: 04.12.1991
(60) Divisional application: 95100758.2
(73) Proprietor: ROHM AND HAAS COMPANY, Philadelphia Pennsylvania 19105 (US)
(72) Inventor: Bardsley, Judy Hughes, Salford, Pennsylvania 18957 (US); Hann, William Mathis, Gwynedd, Pennsylvania 19346 (US); Robertson, Susan Tabb, Ambler, Pennsylvania 19002 (US); Schulman, Jan Edward, Newtown, Pennsylvania 18940 (US)
(74) Representative: Tanner, James Percival

(56) References cited:
- DE-A- 3 743 739
- FR-A- 2 540 885
- PATENT ABSTRACTS OF JAPAN vol. 13, no. 293 (C-615)July 6, 1989& JP-A-01 090 097 (KURITA WATER IND LTD ) April 5, 1989& DATABASE WPIL, accession no. 89-147349 [20] Derwent PublicationsLtd., London, GB;
- PATENT ABSTRACTS OF JAPAN vol. 10, no. 303 (C-378)June 5, 1986& JP-A-61 118 199 (KURITA WATER IND LTD ) April 5, 1989& DATABASE WPIL, accession no. 86-185948 [29] Derwent PublicationsLtd., London, GB;
- PATENT ABSTRACTS OF JAPAN vol. 8, no. 102 (C-222)May 12, 1984& JP-A-59 016 588 (KOGYO GIJUTSUIN ET AL. ) January 27, 1984& DATABASE WPIL, accession no. 84-059131 [10] Derwent PublicationsLtd., London, GB;
- PATENT ABSTRACTS OF JAPAN vol. 10, no. 269 (C-372)September 12, 1986& JP-A-61 090 797 (KURITA WATER IND ) May 8, 1986& DATABASE WPIL, accession no. 86-158685 [25]
- PATENT ABSTRACTS OF JAPAN vol. 10, no. 292 (C-376)October 3, 1986& JP-A-61 107 998 (KURITA WATER IND LTD ) May 25, 1986
- & DATABASE WPIL, accession no. 86-173930 [27] Derwent PublicationsLtd., London, GB.

## Description

This invention is concerned with a method for controlling silica and silicate fouling problems in aqueous systems. More particularly the invention is concerned with the use of certain low molecular weight water-soluble (meth)acrylic or maleic acid based polymers and aluminum or magnesium ions to inhibit deposition of magnesium silicate and other silicate and silica scales on surfaces.

Silica is one of the major fouling problems in many processes using water. Silica is difficult to deal with because it can assume many low solubility chemical forms depending on the conditions. Below about pH 7 for example, monomeric silica tends to polymerize to form oligomeric or colloidal silica. At higher pH's particularly above about pH 9.5, silica can form monomeric silicate ion. Since conversion can be slow, all of these forms may exist at any one time depending on the history of the system. Furthermore, the silicate ion can react with polyvalent cations like magnesium and calcium commonly present in process waters to produce salts with very limited solubility. Thus it is common for a mixture of many forms to be present: monomeric, oligomeric and colloidal silica; magnesium silicate, calcium silicate and other silicate salts. In describing this complex system, it is common practice to refer to the mixture merely as silica or as silica and silicate. Herein these terms are used interchangeably.

A further complication in controlling silica and silicate fouling is that colloidal silica tends to be more soluble as temperature is raised, while polyvalent metal salts of the silicate ion tends to be less soluble with increasing temperature.

Two possible mechanisms for controlling silica or silicate salts from fouling or depositing on a surface during a process are: 1) inhibiting precipitation of the material from the process water , and 2) dispersing the material once it has formed in the bulk water to prevent it from attaching to surfaces. The exact mechanism by which a specific scale inhibitor functions, however, is not well understood. The additives of this invention may be operating by either or both of these routes.

Processes that would likely benefit from a material that could inhibit the deposition of silica or silicate salts from water are, for example: cooling water, boiler water, geothermal process to generate electricity or for heating, and sugar (particularly cane and beet) processing. In each of these processes, heat is transferred to or from the water. In three of these processes, cooling water, boiler water and sugar processing, heat is added to the water and evaporation of some of the water takes place. As the water is evaporated the silica (or silicates) will concentrate. If the silica concentration exceeds its solubility, it can deposit to form either a vitreous coating or an adherent scale that can normally be removed only by laborious mechanical or chemical cleaning. In geothermal processes, hot water laden with silica or silicates is used to heat homes or factories or is converted to steam to drive a turbine and generate electricity. At some point in each of the above four processes, heat is extracted from the water, making any dissolved silicate less soluble and thus likely to deposit on surfaces.

The current practice in each of these four processes is to mechanically limit the amount of silica or silicates that build up in the water so that the catastrophic consequences of deposition of these compounds does not occur. For example, in cooling water, the accepted practice is to limit the amount of silica or silicates to about 180 ppm, expressed as SiO₂. In addition, deposition of CaCO₃ (which can act as a nucleating agent for silica or silicates to deposit upon) is controlled by well known inhibitors such as phosphonates or polymers such as polyacrylic acid or polymaleic acid. Reportedly, the current best available polymer for control of silica or silicates in cooling water is polymaleic acid of about 1000 to 1300 weight average molecular weight. Because the silica is limited to 180 ppm, and because in many arid areas of the US and other parts of the world make-up water may contain from 50 to 90 ppm silica, cooling water can only be concentrated 2 to 3 times before the risk of silica or silicate deposition becomes too great. A polymer that would enable greater re-use or cycling of this silica-limited cooling water would be a great benefit to these areas.

Similarly in boiler water, the American Society of Mechanical Engineers recommends that silica be limited to certain levels depending on the operating pressure of the boiler. For example, in low pressure boilers (less than 300 psig (2.07 M Pa gauge)) the amount of silica, as SiO₂, should be kept below 150 ppm. As the pressure is raised, the level of silica that can be tolerated in the recirculating boiler water becomes progressively less. A polymer that would enable boilers to operate at higher cycles of concentration, particularly low pressure boilers where silica volatilization is not a great concern, would allow more energy-efficient use of the heated water.

In sugar production, especially cane sugar where silica levels are highest, the sugar evaporators are cleaned after about 2 to 3 months to prevent excessive deposition of silica. The cleaning normally involves a vigorous mechanical brushing with harsh chemicals to remove the silica and other salts. An inhibitor that could extend the length of the sugar evaporation processing between cleanings or that would make the cleaning less arduous would extend the life of the evaporators and increase their output during a season.

Geothermal processes presently control the temperature drop as a means of preventing the deposition of silica on equipment surfaces. An inhibitor that limits silica deposition would allow the temperature drop in this process to be greater, and allow more efficient use of the heat in the geothermally produced water.

In addition to preventing fouling of surfaces with silica or silicates, an inhibitor or dispersant for this foulant would allow the use of higher levels of silica/silicates for corrosion control. In potable water, silicates are added to the water to prevent "red water" from corrosion of water mains made of ferrous metals. In cooling water, an inhibitor has long been sought after that would enable silica to be used as an a non-toxic corrosion inhibitor.

In enhanced oil recovery, silicates are added to the drive fluid to help move the oil through the formation. An effective silica-inhibitor would prevent the formation from being clogged with metal ion silicates, thus allowing the efficient recovery of the oil from the underground formation.

Other processes that have need of a silica or silicate inhibitor or dispersant are detergent applications such as laundering, cleaning and dishwashing. In laundering, the silica inhibitor would prevent incrustation or stiffening of the fabric by neutral silicates in the water or by silicates added to the detergent formulation as builders. An inhibitor would have the added benefit of preventing deposition of the silica or silicates on surfaces of the washing machine, such as heating elements and plumbing. In dishwashing, silicates are also added as builders and can produce scale and incrustation analogous to laundering.

(Meth)acrylic acid and maleic acid based polymers have long been used in water treatment. Co- and ter- polymers of (meth)acrylic acid with 2-acrylamido-2-methyl propane sulfonic acid (AMPS) in particular have been proposed for inhibiting sulfate, carbonate and phosphate scale as well as for other treatments such as removing rust. For example, US-A-3,332,904; US-A-3,692,673; US-A-3,709,815; US-A-3,709,816; US-A-3,928,196; US-A-3,806,367 and US-A-3,898,037 are directed to using AMPS-containing polymers. GB-B-2,082,600 proposes an acrylic acid/AMPS/acrylamide polymer and WO-A-83/02607 and WO-A-83/02608 are directed to (meth)acrylic acid/AMPS copolymers as inhibitors of these scales.

In addition US-A-4,711,725 discloses the use of terpolymers of (meth)acrylic acid/AMPS/substituted acrylamides for inhibiting the precipitation of calcium phosphate.

The inhibition of silica and silicate scaling specifically has also been addressed in several publications. US-A-4,029,577 is directed to the use of acrylic acid/hydroxylated lower alkyl acrylate copolymers to control a spectrum of scale imparting precipitates including magnesium and calcium silicates. US-A-4,499,002 discloses (meth)acrylic/(meth)acrylamide/alkoxylated primary alcohol ester of (meth)acrylic acid for the same purpose. JP-A-61-107997 and JP-A-61-107998 are directed to polyacrylamide and selected (meth)acrylic acid copolymers to control silica scale.

The term copolymer is widely employed in publications, but not always with the same meaning, sometimes referring to a polymer from only two monomers and other times to a polymer from two or more. To avoid ambiguity, the term "copolymer", as used herein, is defined as a polymer being derived from only two monomers and a terpolymer is a polymer derived from three or more monomers.

Despite the large number of publications in the area of scale inhibitors, none provide an effective method to control the troublesome silica and silicate scale. Limiting the level of silica introduced or allowed to accumulate in the aqueous system is still the primary method of dealing with the problem.

It is, therefore, an objective of this invention to provide a method that effectively inhibits silica depositions in aqueous systems.

It is an objective to provide a chemical method using additives to replace the mechanical techniques of dealing with silica scaling by limiting the concentration of silica allowed to build-up in the system or by the labor intensive removal of silica deposits.

We have unexpectedly found that the difficult silica and silicate scaling problem in aqueous systems can be controlled by the addition of one or more selected materials to the aqueous system. The selected materials are:
a) certain low molecular weight (meth)acrylic or maleic acid-based copolymers or terpolymers, or salts thereof in combination with aluminum ion or magnesium ion; and
b) low molecular weight poly(meth)acrylic acid or polymaleic acid, or salts thereof, in combination with aluminum ion or magnesium ion.
The copolymers contain units derived from the following:
a) from about 20 to about 95, weight percent, for example from about 20 to about 85 weight percent, of (meth)acrylic acid or maleic acid, and
b)
   (i) from greater than about 11 to about 80 weight percent of a (meth)acrylamido methylpropane sulfonic acid, or styrene sulfonic acid, or
   (ii) from about 5 to about 30 weight percent of (meth)acrylamide or a substituted (meth)acrylamide, or
   (iii) from about 30 to about 60 weight percent of isobutylene or diisobutylene.
The terpolymers contain units derived from the following:
a) from about 30 to about 80 weight percent of (meth)acrylic acid or maleic acid; and
b) from greater than 11 to about 65 weight percent of a (meth)acrylamido methyl propane sulfonic acid or
styrene sulfonic acid; and
c) one or more of:
   (i) from about 5 to about 30 weight percent of (meth)acrylamide or a substituted (meth)acrylamide, and
   (ii) from about 5 to about 30 weight percent of vinyl alcohol, allyl alcohol, vinyl esters, an ester of vinyl or allyl alcohol, styrene, isobutylene or diisobutylene, and
   (iii) from about 3 to about 30 weight percent of styrene sulfonic acid when (meth)acrylamido methylpropane sulfonic acid is present.

In this specification, the term (meth)acrylic means either acrylic or methacrylic, the term (meth)acrylamido means either acrylamido or methacrylamido and the term (meth)acrylamide means either acrylamide or methacrylamide.

According to the present invention, there is provided a method for controlling silica or silicate scale formation in an aqueous system, which comprises adding to said system an effective amount of one or more scale inhibitor selected from mixtures of:-
A) aluminum ion or magnesium ion, with
B)
   i) a poly (meth)acrylic acid or polymaleic acid, or salt thereof, of weight average molecular weight from 1,000 to 25,000, or
   ii) a water-soluble copolymer or terpolymer, or salt thereof, of weight average molecular weight from 1,000 to 25,000, and wherein:-
      I) the copolymer is formed from:
         a) 20 to 95 weight percent of (meth)acrylic acid or maleic acid represented by the structural formula: 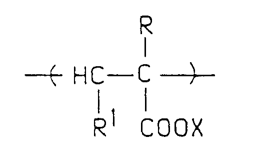 where R is H or CH₃, R¹ is H or COOX, and X is H or metal cation, and
         b)
            i) greater than 11 to 80 weight percent of a (meth)acrylamido sulfonic acid or styrene sulfonic acid, wherein the (meth)acrylamido sulfonic acid has the structural formula: 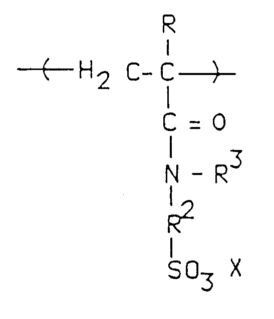 where R is H or CH₃, X is H or metal cation, R² is C₁₋₈ alkyl or phenyl, and R³ is H or C₁₋₄ alkyl, or
            ii) from 5 to 30 weight percent of (meth)acrylamide or a substituted (meth)acrylamide, or
            iii) from 30 to 60 weight percent of isobutylene or diisobutylene, and
      II) the terpolymer is formed from:
         a) 30 to 80 weight percent of (meth)acrylic acid or maleic acid represented by the structural formula: 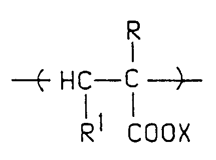 where R is H or CH₃, R¹ is H or COOX, and X is H or metal cation, and
         b) greater than 11 to 65 weight percent of a (meth)acrylamido sulfonic acid or styrene sulfonic acid, wherein the (meth)acrylamido sulfonic acid has the structural formula: 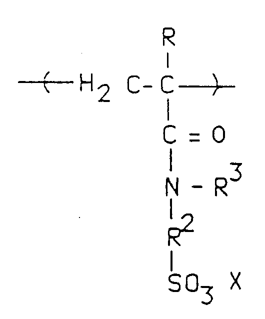 where R is H or CH₃, X is H or metal cation, R² is C₁₋₈ alkyl or phenyl, and R³ is H or C₁₋₄ alkyl, and
         c) one or more of:
            i) from 5 to 30 weight percent of (meth)acrylamide or a substituted (meth)acrylamide, and
            ii) from 5 to 30 weight percent of vinyl alcohol, allyl alcohol, an ester of vinyl or allyl alcohol, vinyl esters, styrene, isobutylene, or diisobutylene, and
            iii) from 3 to 30 weight percent of styrene sulfonic acid when the (meth)acrylamido sulfonic acid is present.
Any water soluble magnesium or aluminium salt is suitable; examples are magnesium chloride, magnesium sulfate and magnesium nitrate.

The finding that the addition of magnesium ion, to an aqueous system that already has magnesium ion present, can reduce scaling of silica and silicates is particularly surprising.

We have found that the preferred additives are: (1) terpolymers of acrylic acid, AMPS and a substituted acrylamide, vinyl acetate or styrene; (2) copolymers of maleic acid and styrene sulfonic acid; and (3) magnesium chloride. Most preferred is the terpolymer of 45 to 67 percent acrylic acid, 17 to 40 percent AMPS and 5 to 30 percent of tertiary butyl acrylamide, vinyl acetate, styrene or styrene sulfonic acid;

As used herein, an ester of vinyl or allyl alchol includes the reaction product of (C₁-C₄) alkanoic acids with a vinyl or allyl alcohol, for example vinyl acetate.

The amount of additives that provides a "scale inhibiting amount" will vary with the aqueous system being treated. Generally the amount will be in the range of 0.1 to 500 parts per million.

The prior art discloses several suitable synthesis methods for preparing the low molecular weight (meth)acrylic and maleic acid based polymers useful is the present invention.

US-A-4,314,004 is directed to one such suitable copolymer synthesis method and the disclosure thereof is incorporated herein by reference. This method requires a specific concentration range of a polymerization initiator and a specific molar ratio range of the initiator concentration and the concentration of certain metal salts to obtain the desired low molecular weight polymers useful in the present invention. The preferred polymerization initiators are peroxide compounds such as ammonium persulfate, potassium persulfate, hydrogen peroxide and t-butyl hydroperoxide. The preferred concentration range of the initiator is between about 1 to about 20 weight percent, based on the weight of monomers. The metal salt used to regulate molecular weight preferably includes cuprous and cupric chloride or bromide, cupric sulfate, cupric acetate, ferrous and ferric chloride, ferrous sulfate and ferric and ferrous phosphate. The molar ratio of the polymerization initiator to the metal salt is preferably between about 40:1 to about 80:1. The homopolymers, copolymers and terpolymers useful in this invention are preferably prepared in water at a polymer concentration of about 40 to about 50 weight percent, based on total weight of solution.

Another method useful to prepare these low molecular weight copolymers and terpolymers is described in US-A-4,301,266, the disclosure thereof also being incorporated herein by reference. In this process isopropanol is used as the molecular weight regulator as well as the reaction solvent. The reaction solvent may also be an aqueous mixture of isopropanol containing at least 45 weight percent isopropanol. The polymerization initiator is a free radical initiator such as hydrogen peroxide, sodium persulfate, potassium persulfate, or benzoyl peroxide. The polymerization is carried out under pressure at a temperature of 120° to 200°C. The concentration of the copolymer in the solvent is preferably 25 to 45 weight percent, based on the weight of the total solution. When polymerization is complete, the isopropanol is distilled from the reactor and the polymer may be neutralized with a base.

Still another method for preparing low molecular weight copolymers and terpolymers useful in this invention is described in US-A-3,646,099, the disclosure thereof also being incorporated herein by reference. This process is directed to the preparation of cyano-containing oligomers; however, it is also applicable for preparing low molecular weight polymers useful in the present invention. This process employs a bisulfite salt as the polymerization molecular weight regulator and the resulting polymers prepared thereby are sulfonate terminated. The preferred bisulfite salt is sodium bisulfite at a concentration of between 3 and 20 weight percent, based on the weight of monomers. The free radical polymerization initiator is ammonium, sodium or potassium persulfate, hydrogen peroxide or t-butyl hydroperoxide. The concentration of the initiator is between about 0.2 to about 10 weight percent, based on monomers. The polymerization temperature is preferably between 20° C and 65° C. and the concentration of the polymers in the aqueous solvent is between 25 and 55 weight percent, based on total solution weight.

The following Examples are presented to illustrate preferred embodiments of the present invention. All percentages are percentages by weight unless specified otherwise.

### Examples

### Evaluation of Inhibitors

The following test was employed to demonstrate the efficacy of the additives of the present invention for either preventing the precipitation of silica and silicate species or for the dispersing of these species. Although the exact mechanism of action of the inhibitors is not completely understood, an additive that minimizes the turbidity of the produced mixture is considered an effective silica and silicate inhibitor. Additives that produce a mixture in this test of less than eight nephelometric turbidity units (NTU) are considered improvements over the current available technology.

The test procedure used was one which simulated silica-laden process water conditions.
A 1% polymer solution was prepared and neutralized to pH 7.
A 1% salt inhibitor solution was prepared.
To a tared 226.8g (8 oz.) plastic bottle was added:
1.44 g sodium silicate solution (34.8% active, Na₂:SiO₂::1:3.35)
50.11 g Polished deionized water.
Stir to Mix.
To a rinsed and dried 113.4g (4 oz.) jar was added:
75 ml deionized water
6.5 ml of the 1% sodium silicate solution prepared above.
1.0 ml inhibitor or salt inhibitor solution.
The samples were then placed in a 70°C water bath with moderate shaking for 30 mins.
The samples were then removed from the bath and to them was added: (using a glass stir rod to stir between each addition)
6.1 ml 1% by weight MgCl₂·6H₂O solution
4.4 ml 1% by weight CaCl₂·2H₂O solution
5.0 ml 1% by weight NaHCO₃ solution
1.8 to 2.1 ml of 0.1 N HCl to adjust pH to 8±0.2
The samples are then replaced in the water bath for 30 minutes with moderate agitation and then removed from the bath and allowed to cool to room temperature for 1 hour.

The turbidity of the samples was measured in nephelometric turbidity units (NTU) using a model DRT100D turbidity meter, manufactured by HF Instruments Inc., Fort Myers, Florida.

The final concentrations of the ions in the test solution were as follows:
500 ppm Si, as SiO₂
300 ppm Ca⁺², as CaCO₃
300 ppm Mg⁺², as CaCO₃
300 ppm HCO3-, as CaCO₃
100 ppm inhibitor, as acid
0, 80 or 140 mg/l ionic additive
Higher turbidity in the sample indicates more precipitate was formed. Lower turbidity indicates the mixture is inhibited from precipitating. The results of this test are presented in Tables I, II, and III.
In Table I, the polymers of Examples 1 to 7, and 13, 14 and 17 are known as silica scale inhibitors. Those of Examples 11, 12, 23, 24, 29 and 32 have not been previously disclosed as scale inhibitors. These latter polymers are tested in combination with metal ions in Tables II and III.

**TABLE I**

| **EFFECT OF POLYMERS ALONE (comparative)** | | | |
|---|---|---|---|
| Example | Composition weight percent | Mw | NTU |
| 56 | (no polymer control) | --- | 22.6 |
| 1 | polymaleic acid | 1200 | 12.6 |
| 2 | polyethylene glycol | 600 | 23.3 |
| 3 | polyacrylic acid | 1000 | 17.0 |
| 4 | " " | 4500 | 26.7 |
| 5 | " " | 10000 | 36.2 |
| 6 | polymethacrylic acid | 4000 | 40.1 |
| 7 | 50 MAL/50 AS | 2900 | 8.7 |
| 11 | 77 AA/23 AMPS | 4500 | 3.9 |
| 12 | 50 AA/50 AMPS | 7630 | 4.6 |
| 13 | 90 AA/10 AM | 1800 | 19.7 |
| 14 | 80 AA/20 AM | 3290 | 11.7 |
| 17 | 69 AA/11 AMPS/20 HEMA | 7690 | 12.6 |
| 23 | 62 AA/23 AMPS/15 tBAM | 4500 | 1.9 |
| 24 | 62 AA/23 AMPS/15 tBAM | 9620 | 1.9 |
| 29 | 62 AA/23 AMPS/15 VAC | 4840 | 1.0 |
| 32 | 47 AA/23 AMPS/30 HEMA | 5920 | 2.2 |
| **AS** = allyl sulfonic acid **MAL** = maleic acid **AA** = acrylic acid **AM** = acrylamide **t-BAM** = tertiary butyl acrylamide **AMPS** = 2-acrylamido-2-methylpropane sulfonic acid **HEMA** = hydroxyethyl methacrylate **VAC** = vinyl acetate | | | |

The polymers of Examples 1 to 7, and 13, 14 and 17 are presently used as scale inhibitors, but can be seen to be inadequate for controlling silica and silicate scaling. Example 1 is of particular interest because it is generally believed to be the most effective of the conventional technology for silica control. Example 7 demonstrates that a conventional allyl sulfonic acid containing polymer proposed in the prior art, does not provide the degree of inhibition shown by compositions of the present invention.

Similarly, Examples 13 and 14 which demonstrate copolymers proposed in the prior art to control silica are also less effective. Example 17 illustrates the need for greater than 11 weight percent AMPS on a terpolymer to achieve effective control.

**TABLE II**

| **IONIC ADDITIVES ALONE AND WITH POLYMER** | | | | |
|---|---|---|---|---|
| Example | Ion | NTU | | |
| | | 140 mg/l ion | 180 mg/l ion | 80 mg/l ion plus 100 ppm polymer of Example 23 |
| 47 | Fe | 58.1 | 51.5 | 11.6 (comparative) |
| 48 | Zn | 78.5 | 40.5 | 30.0 (comparative) |
| 49 | B₄O₇ | 91.7 | 46.9 | 4.2 (comparative) |
| 50 | Al | 22.8 | 32.9 | 1.4 - invention |
| 55 | Mn | 40.3 | 39.9 | 13.4 (comparative) |
| 52 | Ba | 75.3 | 78.4 | 5.5 (comparative) |
| 53 | Sr | 52.5 | 34.8 | 2.2 (comparative) |
| 54 | Ca | 54.8 | 52.0 | 5.2 (comparative) |
| 55 | Mg | 6.0 | 9.3 | 1.3 - invention |
| 23 | none | --- | --- | 1.9 |
| 56 | none (no polymer) | (22.6) | (22.6) | --- |

Table II presents the results of testing a variety of a ionic additives alone and in mixture with a polymer additive. Most of the ionic additives when tested above caused an increase in precipitation as would be expected since metal ion salts of silicate are components of the scale. Magnesium ion, however, inhibited precipitation. This effect is particularly surprising in that the test water already contains magnesium ion. This result demonstrates the value of adding additional magnesium ion for inhibiting the precipitation of silicate scale even though the presence of magnesium ion in the test water or natural water is one of the contributors to the precipitation and scaling.

When the ionic additives are tested in mixture with the terpolymer of Example 23, only addition of magnesium ion and of aluminum ion further improved performance compared to terpolymer alone. This is also unexpected, for the reasons previously cited as well as an expected interference by cationic metal ions with the performance of an anionic terpolymer. This adverse effect is illustrated by adding ions other than aluminum and magnesium.

The results of testing mixtures of the metal ions of aluminum or magnesium with a range of polymers are presented in Table III. Addition of one or the other of these two ions improved the performance of most of the polymers tested. The combination of magnesium ion and the polymers of Examples 1, 11, 23, 24, 29 and 32 produced effective inhibition of precipitation of silica and silicate; less than 8 NTU. The combination of aluminum ion with polymers of Example 1, 4, 11 and 23 also showed good performance. Neither ion give adequate performance with polymers of Example 2, 6 and 14.

**TABLE III**

| **METAL IONS PLUS POLYMERS** | | | | |
|---|---|---|---|---|
| Example | Polymer | NTU | | |
| | | Polymer alone | Polymer plus 80 mg/l of: | |
| | | | Al | Mg |
| 57 | none | 22.6 | 32.6 | 9.3 (comparative) |
| 58 | Ex. 1 | 12.8 | 2.5 | 1.9 |
| 59 | Ex. 2 | 35.4 | 29.6 | --- |
| 60 | Ex. 4 | 26.7 | 7.3 | 28.8 |
| 61 | Ex. 6 | 40.1 | 33.9 | --- |
| 62 | Ex. 11 | 3.9 | 1.4 | 3.5 |
| 63 | Ex. 12 | 0.9 | 1.2 | 1.1 |
| 64 | Ex.14 | 11.7 | --- | 9.9 |
| 65 | Ex. 23 | 1.9 | 1.4 | 1.3 |
| 66 | Ex. 24 | 1.9 | 2.7 | 1.2 |
| 67 | Ex. 32 | 2.9 | 3.7 | 1.1 |
| 68 | Ex. 29 | 1.0 | 1.1 | 0.6 |

The method of the present invention has been described and exemplified in detail herein. Modifications and changes, however, may become apparent to those skills in the art. The modifications, for example, may include using other conventional water treatment chemicals along with the additives of the present invention. This would include other scale inhibitors, for example phosphonates, to control scales other than silica, corrosion inhibitors, biocides, dispersants, defoamers and the like.

## Claims

1. A method for controlling silica or silicate scale formation in an aqueous system, which comprises adding to said system an effective amount of one or more scale inhibitor selected from mixtures of:-
A) aluminum ion or magnesium ion, with
B)
i) a poly (meth)acrylic acid or polymaleic acid, or salt thereof, of weight average molecular weight from 1,000 to 25,000, or
ii) a water-soluble copolymer or terpolymer, or salt thereof, of weight average molecular weight from 1,000 to 25,000, and wherein:-
I) the copolymer is formed from:
a) 20 to 95 weight percent of (meth)acrylic acid or maleic acid represented by the structural formula: 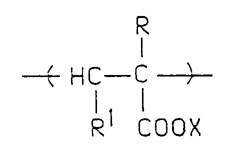 where R is H or CH₃, R¹ is H or COOX, and X is H or metal cation, and
b)
i) greater than 11 to 80 weight percent of a (meth)acrylamido sulfonic acid or styrene sulfonic acid, wherein the (meth)acrylamido sulfonic acid has the structural formula: 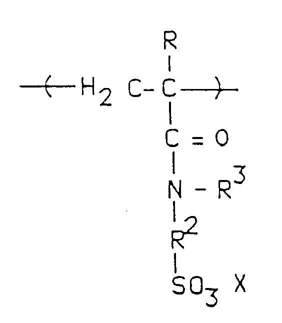 where R is H or CH₃, X is H or metal cation, R² is C₁₋₈ alkyl or phenyl, and R³ is H or C₁₋₄ alkyl, or
ii) from 5 to 30 weight percent of (meth)acrylamide or a substituted (meth)acrylamide, or
iii) from 30 to 60 weight percent of isobutylene or diisobutylene, and
II) the terpolymer is formed from:
a) 30 to 80 weight percent of (meth)acrylic acid or maleic acid represented by the structural formula: 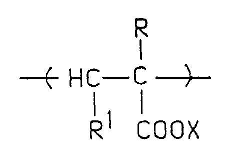 where R is H or CH₃, R¹ is H or COOX, and X is H or metal cation, and
b) greater than 11 to 65 weight percent of a (meth)acrylamido sulfonic acid or styrene sulfonic acid, wherein the (meth)acrylamido sulfonic acid has the structural formula: 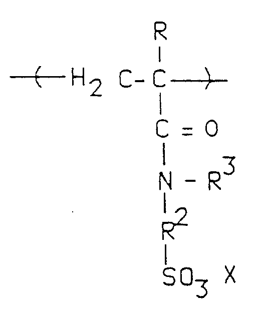 where R is H or CH₃, X is H or metal cation, R² is C₁₋₈ alkyl or phenyl, and R³ is H or C₁₋₄ alkyl, and
c) one or more of:
i) from 5 to 30 weight percent of (meth)acrylamide or a substituted (meth)acrylamide, and
ii) from 5 to 30 weight percent of vinyl alcohol, allyl alcohol, an ester of vinyl or allyl alcohol, vinyl esters, styrene, isobutylene, or diisobutylene, and
iii) from 3 to 30 weight percent of styrene sulfonic acid when the (meth)acrylamido sulfonic acid is present.

2. A method as claimed in claim 1, wherein said substituted (meth)acrylamide is characterized by the formula: 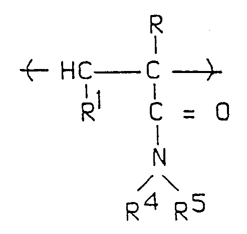 wherein R¹ is H or COOX, X is H or metal cation, R⁴ and R⁵ are each independently either H or a C₁₋₈ alkyl, but both cannot be H , and R is H or CH₃.

3. A method as claimed in claim 1 or claim 2, wherein said vinyl esters are characterized by the formula: 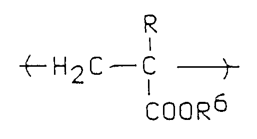 wherein R is H or CH₃, R⁶ is a C₁₋₆ alkyl, a C₆₋₁₀ aryl or aralkyl, or 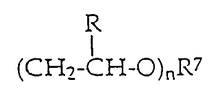 where n is 1-3, R⁷ is H, a C₁₋₆ alkyl or PO₃X where X is H or metal cation.

4. A method as claimed in claim 1, wherein said water-soluble terpolymer comprises from 45 to 67 weight percent acrylic acid, from 17 to 40 weight percent 2-acrylamido-2-methyl propane sulfonic acid, and from 5 to 30 weight percent of a third unit selected from acrylamide, substituted acrylamide, vinyl alcohol, allyl alcohol, an ester of vinyl or allyl alcohol, vinyl esters, vinyl acetate and styrene

5. A method as claimed in claim 1, wherein said water-soluble terpolymer comprises from 45 to 75 weight percent acrylic acid, from 17 to 40 weight percent 2-acrylamido-2-methyl propane sulfonic acid, and from 4 to 10 weight percent of styrene sulfonic acid.

6. A method as claimed in claim 1 or claim 2, wherein the (meth)acrylic or maleic acid copolymer comprises from 20 to 85 weight percent of the (meth)acrylic or maleic acid as defined in claim 1.

7. A method as claimed in claim 6, wherein said water-soluble copolymer comprises from 20 to 80 weight percent maleic acid, and from 50 to 80 weight percent of styrene sulfonic acid.

8. A method as claimed in any preceding claim, wherein said water-soluble copolymer or terpolymer has a weight average molecular weight of from 2,000 to 10,000.

9. A method as claimed in any preceding claim, wherein the magnesium ion is derived from magnesium chloride or magnesium sulfate.

10. A method as claimed in any preceding claim, wherein said aqueous system is:-
(i) a cooling tower;
(ii) a boiler;
(iii) used in the production of sugar;
(iv) used in enhanced oil recovery;
(v) used in geothermal processes; or
(vi) used in detergent applications.

11. A method as claim in any preceding claim, wherein the scale inhibiting amount is in the range of 0.1 to 500 parts per million.

## Patentansprüche

1. Verfahren zum Kontrollieren einer Bildung einer Kieselsäure- oder Silikatablagerung in einem wäßrigen System, welches Verfahren ein Zugeben einer wirksamen Menge von einem oder mehreren Ablagerungsinhibitoren zum System umfaßt, welche Inhibitoren gewählt sind aus Gemischen von:
A) Aluminiumion oder Magnesiumion mit
B)
i) einer Poly(meth)acrylsäure oder Polymaleinsäure oder einem Salz davon mit einem Gewichtsmittel des Molekulargewichts von 1.000 bis 25.000, oder
ii) einem wasserlöslichen Copolymer oder Terpolymer oder einem Salz davon mit einem Gewichtsmittel des Molekulargewichts von 1.000 bis 25.000, und worin:
I) das Copolymer gebildet ist aus:
a) 20 bis 95 Gewichtsprozent (Meth)acrylsäure oder Maleinsäure, dargestellt durch die Strukturformel: 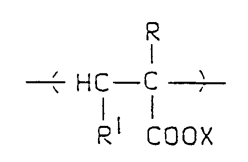 worin R H oder CH₃ ist, R¹ H oder COOX ist, und X H oder ein Metallkation ist, und
b)
i) mehr als 11 bis 80 Gewichtsprozent einer (Meth)acrylamidosulfonsäure oder Styrolsulfonsäure, worin die (Meth)acrylamidosulfonsäure die Strukturformel: 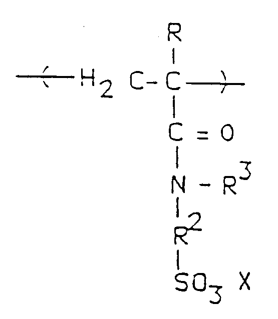 besitzt, worin R H oder CH₃ ist, X H oder ein Metallkation ist, R² C₁₋ ₈Alkyl oder Phenyl ist, und R³ H oder C₁₋₄Alkyl ist, oder
ii) von 5 bis 30 Gewichtsprozent (Meth)acrylamid oder ein substituiertes (Meth)acrylamid, oder
iii) von 30 bis 60 Gewichtsprozent Isobutylen oder Diisobutylen, und
II) das Terpolymer gebildet ist aus:
a) 30 bis 80 Gewichtsprozent (Meth)acrylsäure oder Maleinsäure, dargestellt durch die Strukturformel: 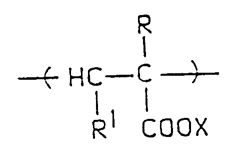 worin R H oder CH₃ ist, R¹ H oder COOX ist, und X H oder ein Metallkation ist, und
b) mehr als 11 bis 65 Gewichtsprozent einer (Meth)acrylamidosulfonsäure oder Styrolsulfonsäure, worin die (Meth)acrylamidosulfonsäure die Strukturformel: 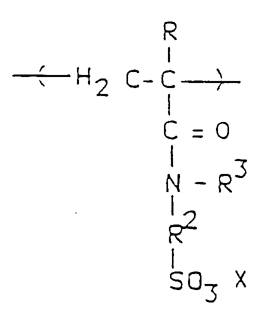 besitzt, worin R H oder CH₃ ist, X H oder ein Metallkation ist, R² C₁₋ ₈Alkyl oder Phenyl ist, und R³ H oder C₁₋₄Alkyl ist, und
c) ein oder mehrere von:
i) von 5 bis 30 Gewichtsprozent (Meth)acrylamid oder ein substituiertes (Meth)acrylamid, und
ii) von 5 bis 30 Gewichtsprozent Vinylalkohol, Allylalkohol, ein Ester von Vinyl- oder Allylalkohol, Vinylester, Styrol, Isobutylen oder Diisobutylen, und
iii) von 3 bis 30 Gewichtsprozent Styrolsulfonsäure, wenn die (Meth)acrylamidosulfonsäure vorhanden ist.

2. Verfahren, wie in Anspruch 1 beansprucht, wobei das substituierte (Meth)acrylamid gekennzeichnet ist durch die Formel: 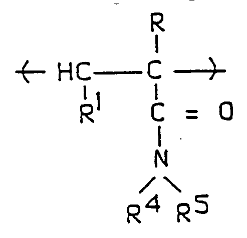 worin R¹ H oder COOX ist, X H oder ein Metallkation ist R⁴ und R⁵ jeweils unabhängig entweder H oder ein C₁₋₈Alkyl sind, aber beide nicht H sein können, und R H oder CH₃ ist.

3. Verfahren, wie in Anspruch 1 oder Anspruch 2 beansprucht, wobei die Vinylester gekennzeichnet sind durch die Formel: 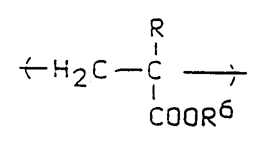 worin R H oder CH₃ ist, R⁶ ein C₁₋₆Alkyl ein C₆₋₁₀Aryl oder Aralkyl oder 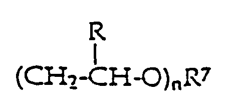 ist, worin n 1-3 ist, R⁷ H, ein C₁₋₆Alkyl oder PO₃X ist, worin X H oder ein Metallkation ist.

4. Verfahren, wie in Anspruch 1 beansprucht, wobei das wasserlösliche Terpolymer umfaßt: von 45 bis 67 Gewichtsprozent Acrylsäure, von 17 bis 40 Gewichtsprozent 2-Acrylamido-2-methylpropansulfonsäure, und von 5 bis 30 Gewichtsprozent eine dritte Einheit, ausgewählt aus Acrylamid, substituiertem Acrylamid, Vinylalkohol, Allylalkohol, einem Ester von Vinyl- oder Allylalkohol, Vinylester, Vinylacetat und Styrol.

5. Verfahren, wie in Anspruch 1 beansprucht, wobei das wasserlösliche Terpolymer umfaßt: von 45 bis 75 Gewichtsprozent Acrylsäure, von 17 bis 40 Gewichtsprozent 2-Acrylamido-2-methylpropansulfonsäure, und von 4 bis 10 Gewichtsprozent Styrolsulfonsäure.

6. Verfahren, wie in Anspruch 1 oder Anspruch 2 beansprucht, wobei das (Meth)acrylsäure- oder Maleinsäurecopolymer von 20 bis 85 Gewichtsprozent der (Meth)acrylsäure oder Maleinsäure, wie in Anspruch 1 definiert, umfaßt.

7. Verfahren, wie in Anspruch 6 beansprucht, wobei das wasserlösliche Copolymer von 20 bis 80 Gewichtsprozent Maleinsäure und von 50 bis 80 Gewichtsprozent Styrolsulfonsäure umfaßt.

8. Verfahren, wie in einem vorhergehenden Anspruch beansprucht, wobei das wasserlösliche Copolymer oder Terpolymer ein Gewichtsmittel des Molekulargewichts von 2.000 bis 10.000 aufweist.

9. Verfahren, wie in einem vorhergehenden Anspruch beansprucht, wobei das Magnesiumion von Magnesiumchlorid oder Magnesiumsulfat stammt.

10. Verfahren, wie in einem vorhergehenden Anspruch beansprucht, wobei das wäßrige System:
(i) ein Kühlturm ist;
(ii) ein Boiler ist;
(iii) bei der Herstellung von Zucker verwendet wird;
(iv) bei einer verbesserten Ölgewinnung verwendet wird;
(v) in geothermischen Verfahren verwendet wird; oder
(vi) in Tensidanwendungen verwendet wird.

11. Verfahren, wie in einem vorhergehenden Anspruch beansprucht, wobei die Menge, welche die Ablagerung hemmt, im Bereich von 0,1 bis 500 Teile pro Million ist.

## Revendications

1. Procédé pour maîtriser la formation de tartre de silicate ou de silice dans un système aqueux, qui consiste à ajouter audit système une quantité efficace d'un ou plusieurs inhibiteurs de tartre choisis parmi les mélanges:
A) d'ion aluminium ou d'ion magnésium, avec
B)
i) un acide poly(méth)acrylique ou un acide polymaléique, ou un de leurs sels, de masse moléculaire moyenne en poids de 1 000 à 25 000, ou
ii) un copolymère ou terpolymère hydrosoluble, ou un de leurs sels, de masse moléculaire moyenne en poids de 1 000 à 25 000, et dans lequel:
I) le copolymère est formé:
a) de 20 à 95 pourcent en poids d'acide (méth)acrylique ou d'acide maléique représenté par la formule développée: 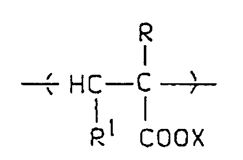 où R est H ou CH₃, R¹ est H ou COOX, et X est H ou un cation métallique, et
b)
i) de plus de 11 à 80 pourcent en poids d'un acide (méth)acrylamidosulfonique ou d'un acide styrènesulfonique, dans lequel l'acide (méth)acrylamidosulfonique possède la formule développée: 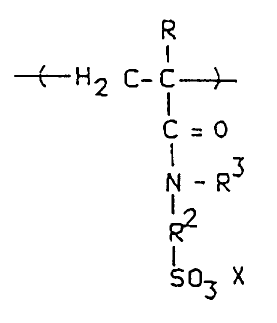 où R est H ou CH₃, X est H ou un cation métallique, R² est un groupe alkyle en C₁ à C₈ ou phényle, et R³ est H ou un groupe alkyle en C₁ à C₄, ou
ii) de 5 à 30 pourcent en poids de (méth)acrylamide oud'un(méth)acrylamide substitué, ou
iii) de 30 à 60 pourcent en poids d'isobutylène ou de diisobutylène, et
II) le terpolymère est formé:
a) de 30 à 80 pourcent en poids d'acide (méth)acrylique ou d'acide maléique représenté par la formule développée: 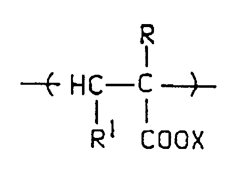 où R est H ou CH₃, R¹ est H ou COOX, et X est H ou un cation métallique, et
b) de plus de 11 à 65 pourcent en poids d'un acide (méth)acrylamidosulfonique ou d'un acide styrènesulfonique,dans lequel l'acide (méth)acrylamidosulfonique possède la formule développée: 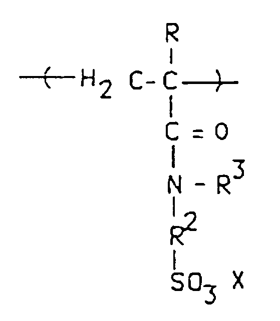 où R est H ou CH₃, X est H ou un cation métallique, R₂ est un groupe alkyle en C₁ à C₈ ou un groupe phényle, et R³ est H ou un groupe alkyle en C₁ à C₄, et
c) d'un ou plus de:
i) 5 à 30 pourcent en poids de (méth)-acrylamide ou d'un (méth)acrylamide substitué, et
ii) 5 à 30 pourcent en poids d'alcool vinylique, d'alcool allylique, d'un ester d'alcool vinylique ou allylique, d'esters vinyliques,de styrène, d'isobutylène ou de diisobutylène, et
iii) 3 à 30 pourcent en poids d'acide styrènesulfonique quand l'acide (méth)-acrylamidosulfonique est présent.

2. Procédé selon la revendication 1, dans lequel ledit (méth)acrylamide substitué est caractérisé par la formule: 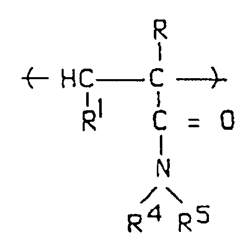 dans laquelle R¹ est H ou COOX, X est H ou un cation métallique, R⁴ et R⁵ sont chacun indépendamment soit H, soit un groupe alkyle en C₁ à C₈, mais ne peuvent pas être tous deux H, et R est H ou CH₃.

3. Procédé selon la revendication 1 ou 2, dans lequel lesdits esters vinyliques sont caractérisés par la formule: 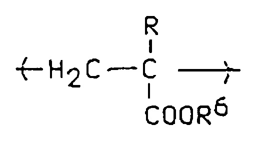 dans laquelle R est H ou CH₃, R⁶ est un groupe alkyle en C₁ à C₆, un groupe aralkyle ou aryle en C₆ à C₁₀, ou 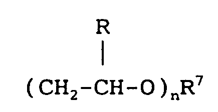 où n vaut 1 à 3, R⁷ est H, un groupe alkyle en C₁ à C₆ ou PO₃X où X est H ou un cation métallique.

4. Procédé selon la revendication 1, dans lequel ledit terpolymère hydrosoluble comprend de 45 à 67 pourcent en poids d'acide acrylique, de 17 à 40 pourcent en poids d'acide 2-acrylamido-2-méthylpropanesulfonique, et de 5 à 30 pourcent en poids d'un troisième motif choisi parmi l'acrylamide, l'acrylamide substitué, l'alcool vinylique, l'alcool allylique, un ester de l'alcool allylique ou vinylique, les esters vinyliques, l'acétate de vinyle et le styrène.

5. Procédé selon la revendication 1, dans lequel ledit terpolymère hydrosoluble comprend de 45 à 75 pourcent en poids d'acide acrylique, de 17 à 40 pourcent en poids d'acide 2-acrylamido-2-méthylpropanesulfonique, et de 4 à 10 pourcent en poids d'acide styrènesulfonique.

6. Procédé selon la revendication 1 ou 2, dans lequel le copolymère d'acide (méth)acrylique ou maléique comprend de 20 à 85 pourcent en poids de l'acide (méth)acrylique ou maléique défini selon la revendication 1.

7. Procédé selon la revendication 6, dans lequel ledit copolymère hydrosoluble comprend de 20 à 80 pourcent en poids d'acide maléique, et de 50 à 80 pourcent en poids d'acide styrènesulfonique.

8. Procédé selon l'une quelconque des revendications précédentes, dans lequel ledit copolymère ou terpolymère hydrosoluble possède une masse moléculaire moyenne en poids de 2 000 à 10 000.

9. Procédé selon l'une quelconque des revendications précédentes, dans lequel l'ion magnésium est dérivé du chlorure de magnésium ou du sulfate de magnésium.

10. Procédé selon l'une quelconque des revendications précédentes, dans lequel ledit système aqueux est:
(i) une tour de refroidissement;
(ii) une chaudière;
(iii) utilisé dans la production de sucre;
(iv) utilisé dans la récupération améliorée d'huile;
(v) utilisé dans des procédés géothermiques; ou
(vi) utilisé dans des applications détergentes.

11. Procédé selon l'une quelconque des revendications précédentes, dans lequel la quantité inhibant le tartre est comprise entre 0,1 et 500 parties par million.
